Europäisches Patentamt

European Patent Office

Office européen des brevets

(11) Veröffentlichungsnummer: **0 450 308 A2**

# EUROPÄISCHE PATENTANMELDUNG

(21) Anmeldenummer: 91103064.1

(22) Anmeldetag: 01.03.91

(51) Int. Cl.⁵: **C08J 9/14**, //C08L75:04

(30) Priorität: 06.03.90 DE 4006952

(43) Veröffentlichungstag der Anmeldung:
09.10.91 Patentblatt 91/41

(84) Benannte Vertragsstaaten:
BE DE DK ES FR GB IT LU NL SE

(71) Anmelder: HOECHST AKTIENGESELLSCHAFT
Postfach 80 03 20
W-6230 Frankfurt am Main 80(DE)

(72) Erfinder: Behme, Klaus-Jürgen
Kurmainzerstrasse 25
W-6239 Eppstein/Taunus(DE)
Erfinder: Deger, Hans-Matthias, Dr.
Am Rheingauweg 8
W-6238 Hofheim am Taunus(DE)
Erfinder: Schütz, Claudia
Dresdnerstrasse 9
W-6093 Flörsheim am Main(DE)

(54) Verfahren zur Herstellung von Schaumstoffen mit Hilfe von fluorierten Treibmitteln.

(57) Verfahren zur Herstellung von Schaumstoffen mit Hilfe von Treibmitteln, die Fluoralkane und fluorierte Ether enthalten, sowie nach diesem Verfahren erhältliche Schaumstoffe.

Die Erfindung betrifft ein Verfahren zur Herstellung von Schaumstoffen auf Basis von Polyisocyanaten durch Umsetzung von Polyisocyanaten, Verbindungen mit mindestens zwei gegenüber Isocyanatgruppen reaktionsfähigen Wasserstoffatomen, Treibmitteln und gegebenenfalls weiteren Zusatzmitteln. Dabei werden Treibmittel verwendet, die zu mindestens 10 Mol-% aus mindestens einem Fluoralkan der Formel (I) $C_aH_bF_c$ , mit $a = 2-6$, $b = 1-12$ und $c = 2-13$, und mindestens einem fluorierten Ether der Formel (II) $C_aH_bF_c\text{-O-}C_dH_eF_f$ mit $a = 1-6$, $b = 1-12$, $c = 1-12$, $d = 1-2$, $e = 0-5$ und $f = 0-5$ bestehen.

Weiter betrifft die Erfindung die nach diesem Verfahren erhältlichen Schaumstoffe.

EP 0 450 308 A2

Verfahren zur Herstellung von Schaumstoffen mit Hilfe von Treibmitteln, die Fluoralkane und fluorierte Ether enthalten, sowie nach diesem Verfahren erhältliche Schaumstoffe.

Die Erfindung betrifft ein Verfahren zur Herstellung von Schaumstoffen auf Basis von Polyisocyanaten, insbesondere von Polyurethan- und Polyisocyanuratschaumstoffen. Die Herstellung solcher Schaumstoffe ist bekannt und beispielsweise im Kunststoff-Handbuch, Band VII, Polyurethane, Carl Hanser Verlag München, Wien (1983), Seiten 246 bis 331, sowie in EP-A1-0 077 964, EP-A1-0 334 059, DE-AS 1 694 138 (= GB-PS 1 209 243) beschrieben.

In Ullmanns Enzyklopädie der technischen Chemie (1980), Band 19, Seiten 301 bis 341, sind die verwendbaren Rohstoffe und die möglichen Verfahren zur Herstellung von Polyurethanhartschaumstoffen zusammenfassend beschrieben.

Des weiteren sind entsprechende Hinweise in Kirk-Othmer, Encycl. of Chem. Technology, 3rd edition, Vol. 11 (1980), Pages 87-89 und Vol. 23 (1983), Pages 576-607, zu finden.

Übliche Treibmittel für Polyurethane sind Kohlendioxid - das bei der Herstellung der Polyurethane aus Polyisocyanaten und Verbindungen mit reaktivem Wasserstoff durch Zusatz von Wasser erzeugt wird - und/oder sogenannte "physikalische Treibmittel", nämlich leicht flüchtige organische Substanzen, wie Aceton, Ethylacetat, halogensubstituierte Alkane wie Methylenchlorid, Chloroform, Ethylidenchlorid, Vinylidenchlorid, Monofluortrichlormethan, Chlordifluormethan, Chlorhexafluorpropan, Dichlordifluormethan, ferner Butan, Hexan, Heptan oder Diethylether. Die Verwendbarkeit fluorierter Kohlenwasserstoffe zur Herstellung von wärmeisolierenden Polyurethanschaumstoffen ist z. B. aus der DE-PS 1 111 381 bekannt. Auch anorganische Treibmittel, z. B. Luft, $CO_2$ oder $N_2O$ kommen in Frage. Weitere Einzelheiten über die Verwendung von Treibmitteln sind im Kunststoff-Handbuch, Band VII, Carl-Hanser-Verlag, München (1966), z. B. auf den Seiten 108 und 109, 453 bis 455 und 507 bis 510 beschrieben.

Harte Polyurethanschaumstoffe werden überwiegend unter Mitverwendung physikalischer Treibmittel hergestellt. Bei der Herstellung von geschlossenzelligen Schaumkunststoffen ist es wünschenswert, daß die verwendeten Treibmittel als Zellgas im Schaumstoff verbleiben, dort als Dämmgas fungieren und eine verbesserte Wärmedämmung der Schaumstoffe bewirken.

Diese Anforderung führte im Lauf der Entwicklung der Polyurethanschaum-Technologie dazu, fluorierte Chlorkohlenwasserstoffe (FCKW), insbesondere Trichlorfluormethan (FCKW 11), als Dämm- und Treibgase zu verwenden.

Die FCKW stehen jedoch inzwischen im Verdacht, die Ozonhülle der Erde zu schädigen. Es ist deshalb notwendig, auf die Verwendung dieser Verbindungen baldmöglichst zu verzichten und stattdessen andere Substanzen, die kein 0zon-Schädigungspotential haben, als Dämm- und Treibgas zu verwenden.

Diskutiert wird der Verzicht auf FCKW zugunsten von $CO_2$, das - wie oben erwähnt - durch Zusatz von Wasser bei der Herstellung der Polyurethane aus Polyisocyanaten entsteht. Diese Methode ist zwar für manche Schaumstoffe vertretbar, führt aber insbesondere bei Hartschaumstoffen zu großen Nachteilen, weil die so hergestellten Schaumstoffe eine erhöhte Wärmeleitfähigkeit und damit ein geringeres Wärmedämmvermögen aufweisen als die mit Hilfe von FCKW hergestellten Schaumstoffe.

In der deutschen Patentanmeldung Nr. P 3 940 447.1 ist ein Verfahren zur Herstellung von Schaumstoffen mit Hilfe von fluorierten Ethern beschrieben. Die deutsche Patentanmeldung Nr. P 3 940 977.5 betrifft ein Verfahren zur Herstellung von Schaumstoffen mit Hilfe von Fluoralkanen.

Es wurde nun gefunden, daß Mischungen, die fluorierte Ether und verschiedene Fluoralkane enthalten - insbesondere Fluoralkane, die bei Raumtemperatur gasförmig sind und üblicherweise als verflüssigte Gase zur Verfügung stehen - sehr geeignete Treib- und Dämmgase für die Herstellung von Schaumstoffen sind. Insbesondere wurde gefunden, daß man eine Mischung aus Fluoralkanen, fluorierten Ethern und $CO_2$ als Treibmittel benutzen kann, wobei schon geringe Anteile an Fluoralkanen und fluorierten Ethern (und entsprechend hohem $CO_2$-Anteil und daher hohem Wasseranteil in der Hartschaum-Rezeptur) die Wärmedämmwirkung erheblich verbessern.

Gegenstand der Erfindung ist ein Verfahren zur Herstellung von Schaumstoffen auf Basis von Polyisocyanaten durch Umsetzung von Polyisocyanaten, Verbindungen mit mindestens zwei gegenüber Isocyanatgruppen reaktionsfähigen Wasserstoffatomen, Treibmitteln und gegebenenfalls weiteren Zusatzmitteln, dadurch gekennzeichnet, daß man Treibmittel verwendet, die zu mindestens 10 Mol-% aus mindestens einem Fluoralkan der Formel (I) $C_aH_bF_c$ , mit a = 2-6, b = 1-12 und c = 2-13, und mindestens einem fluorierten Ether der Formel (II) $C_aH_bF_c\text{-}O\text{-}C_dH_eF_f$ , mit a = 1-6, b = 1-12, c = 1-12, d = 1-2, e = 0-5 und f = 0-5, bestehen.

Vorzugsweise bestehen mindestens 20 Mol-%, insbesondere 40-60 Mol-% des Treibmittels aus mindestens einem der genannten Fluoralkane und mindestens einem der genannten Ether. Das Treibmittel kann auch zu 100 Mol-% aus diesen beiden Arten von Verbindungen bestehen. Wenn jedoch - was im allgemeinen der Fall sein wird - nicht das gesamte Treibmittel daraus besteht, dann besteht der Rest aus einem der oben genannten konventionellen Treibgase, wobei man im allgemeinen jedoch aus den oben genannten Gründen auf FCKW weitgehend oder ganz verzichten wird. Vorzugsweise besteht der Rest dann zumindest teilweise aus $CO_2$, welches durch Zusatz einer geeigneten Menge an Wasser bei der Umsetzung der Polyisocyanate zu den Schaumstoffen erzeugt wird. Eine "geeignete" Menge Wasser ist dabei eine Menge, die den gewünschten Anteil an $CO_2$ erzeugt. Besonders bevorzugt ist ein Treibgas, das im wesentlichen aus mindestens einem Fluoralkan, mindestens einem fluorierten Ether und (durch Wasserzugabe erzeugtem) $CO_2$ besteht, d.h. daß der oben angesprochene "Rest" des Treibgases im wesentlichen aus $CO_2$ besteht.

Als Fluoralkane der Formel (I) setzt man vorzugsweise solche mit a = 2-5, b = 1-9 und c = 3-11 ein, insbesondere solche mit a = 2-4, b = 1-6 und c = 4-9.

Als fluorierte Ether der Formel (II) werden solche mit a = 1-5, b = 1-6, c = 5-10, d = 1-2, e = 0-3 und f = 2-5 bevorzugt, sowie solche mit a = 1-3, b = 1-4, c = 1-6, d = 1-2, e = 0-3 und f = 2-5.

Die Fluoralkane und die fluorierten Ether können geradkettig oder verzweigt sein.

Das Molverhältnis der Fluoralkane zu den fluorierten Ethern beträgt vorzugsweise 1 : 10 bis 10 : 1, insbesondere 1 : 5 bis 5 : 1.

Die Herstellung der Fluoralkane (I) und der fluorierten Ether (II) wird beschrieben in Ullmann's Encyclopedia of Industrial Chemistry, Volume A 11 (1988), Seite 349-389, insbesondere Seite 354-355 und 367; A. M. Lovelace et al., Aliphatic Fluorine Compounds (1958); H. Liebig und K. Ulm, Herstellung und Anwendung aliphatischer Fluorverbindungen II., Chemiker-Zeitung (1976), S. 3-13.

Ein weiterer Gegenstand der Erfindung sind Schaumstoffe auf Basis von Polyisocyanaten, die nach dem obigen Verfahren erhältlich sind.

Bei Verwendung der genannten Fluoralkane und fluorierten Ether kann man die bisher üblichen Schaumrohstoffe einsetzen und, wie oben gesagt, die Anteile an Wasser oder konventionellem physikalischem Treibmittel weitgehend reduzieren oder sogar ganz auf sie verzichten.

Geeignete Polyisocyanate für das erfindungsgemäße Verfahren sind die für diesen Zweck üblichen aliphatischen, cycloaliphatischen und aromatischen Di- oder Polyisocyanate.

Bevorzugt sind 2,4- und 2,6-Toluyldiisocyanat, Diphenylmethandiisocyanat, Polymethylenpolyphenylisocyanat und Mischungen davon. Es können auch Carbodiimidgruppen, Urethangruppen, Allophanatgruppen, Isocyanuratgruppen, Harnstoffgruppen oder Biuretgruppen enthaltende Polyisocyanate, die man als "modifizierte Polyisocyanate" und "Isocyanat-Präpolymere" bezeichnet, verwendet werden.

Die Polyisocyanate werden mit Verbindungen umgesetzt, die mindestens zwei gegenüber Isocyanatgruppen reaktionsfähige Wasserstoffatome enthalten, beispielsweise Hydroxylgruppen aufweisende Verbindungen auf Polyether-, Polyester- und Aminbasis, sowie Amino- und/oder Carboxyl- und/oder Thiolgruppen aufweisende Verbindungen. Diese Verbindungen haben in der Regel 2-8 gegenüber Isocyanaten reaktionsfähige Wasserstoffatome.

Als Katalysatoren bei dieser Umsetzung werden, wie üblich, tertiäre Amine, die ggf. auch gegenüber Isocyanatgruppen aktive Wasserstoffatome enthalten können und/oder organische Metallverbindungen, vorzugsweise Zinnsalze von Carbonsäuren eingesetzt.

Außerdem mitverwendet werden im allgemeinen oberflächenaktive Zusatzstoffe, wie Emulgatoren und Schaumstabilisatoren. Bei den Emulgatoren handelt es sich z.B. um Salze von Fettsäuren. Als Schaumstabilisatoren kommen oft Polyethersiloxane zum Einsatz.

Überraschenderweise tritt bei Verwendung leichtsiedender Fluoralkane, die unter Normalbedingungen gasförmig sind (z.B. 1,1,1,2-Tetrafluorethan mit einem Siedepunkt von -26,5 °C oder 2H-Heptafluorpropan mit einem Siedepunkt von -17,3 °C) im Gemisch mit fluorierten Ethern nach Einmischen in die Polyolreaktionskomponente eine erhebliche Verminderung des Treibmittel-Dampfdruckes ein, was die Herstellung von Schaumstoffen in vorteilhafter Arbeitsweise ermöglicht. Diese Drucksenkung ist beispielhaft in Tabelle 1 dargestellt.

In der EP-A2-0 345 580 wird vorgeschlagen, bei Verwendung von unter Druck verflüssigten Fluoralkanen, wie Tetrafluorethan oder Heptafluorpropan, diese zuerst in den gasförmigen Zustand zu überführen und als Gas in die Reaktionskomponenten einzubringen. Diese aufwendige Prozedur ist bei Verwendung der erfindungsgemäßen Mischungen nicht notwendig.

Tabelle 1 zeigt die überraschende Drucksenkung an vier Beispielen:
In den beiden ersten Zeilen sind die Dampfdrücke in bar von 1,1,1,2-Tetrafluorethan und 2H-Heptafluorpropan angegeben, darunter die Dampfdrücke von Gemischen aus einem dieser beiden Fluoralkane, einem fluorierten Ether und der Polyolreaktionskomponente gemäß einem der erfindungsgemäßen Beispiele.

Der Dampfdruck der erfindungsgemäßen Treibmittel-Gemische nach dem Einmischen in die Polyolreaktionskomponente liegt auch bei Verwendung von gasförmigen Fluoralkanen im Bereich des Atmosphärendruckes, weswegen sich solche Mischungen nach den bei FCKW 11 (Siedepunkt 23,8 °C) üblichen Verfahren verarbeiten lassen.

Auch mit Gemischen aus fluorierten Ethern und Fluoralkanen, die bei Normaltemperatur flüssig sind, d.h. einen Siedepunkt über 20-25 °C haben, werden feinzellige Schaumstoffe mit vergleichsweise niedriger Wärmeleitfähigkeit erhalten.

Es ist auch möglich, Fluoralkane mit unterschiedlichen Siedepunkten, so z.B. 1,1,1,2-Tetrafluorethan mit einem Siedepunkt von -26,5 °C und 1H-Perfluorhexan, das einen Siedepunkt von 70 °C hat, als Gemisch zu verwenden.

Die nachfolgenden Beispiele 1-10 erläutern die Erfindung. Sie zeigen geeignete Hartschaum-Rezepturen mit unterschiedlichen Anteilen verschiedener Fluoralkane und fluorierter Ether. In den Vergleichsbeispielen wird dagegen entweder aus Wasser entstandenes $CO_2$ oder 1,1,1,2-Tetrafluorethan oder 2H-Heptafluorpropan als alleiniges Treibmittel verwendet. Es zeigt sich schon bei relativ geringen Anteilen an Fluoralkan/Fluorether von z.B. 15 Mol-%, bezogen auf die gesamte Treibmittel-Menge, eine deutliche Verringerung der Wärmeleitfähigkeit der Schaumstoffe. Dieser Effekt nimmt mit längerer Lagerzeit sogar noch zu.

Die erfindungsgemäßen Treibmittel eignen sich auch zur Aufschäumung von weichen Schaumstoffen mit offenzelliger Struktur und zur Herstellung von Schaumstoff-Formteilen mit zelligem Kern und kompakter Oberfläche gemäß DE-AS 1 694 138 (entsprechend GB-PS 1 209 243).

Die Eigenschaften der in den folgenden Beispielen hergestellten Schaumstoffe sind in der ihnen folgenden Tabelle 2 angegeben.

**Vergleichsbeispiel 1:**

(Verwendung von $CO_2$ als alleiniges Treibmittel)

85 g Sucrose/Propylenoxid-Polyether der OH-Zahl 380, 15 g Ethylendiamin/Propylenoxid-Polyether der OH-Zahl 480, 1 g Schaumstabilisator (Typ DC 193 von Dow Corning Corp.), 1,5 g Dimethylcyclohexylamin und 3,8 g Wasser wurden mittels eines Rührers mit 2500 Umdrehungen 15 Sekunden lang innig vermischt, dann mit 192 g rohem Diphenylmethandiisocyanat (MDI handelsüblicher Qualität) 10 Sekunden innig vermischt und anschließend in eine Papierform gegossen. Die Aufschäumung des Gemisches begann nach ca. 15 Sekunden und war nach ca. 75 Sekunden beendet. Es resultierte ein harter Schaumstoff mit den in der Tabelle angegebenen Eigenschaften.

**Vergleichsbeispiel 2:**

(Verwendung von 1,1,1,2-Tetrafluorethan (Siedepunkt -26,5 °C) neben $CO_2$ als Treibmittel)

Wie im Vergleichsbeispiel 1 wurden 85 g Sucrose/Propylenoxid-Polyether der OH-Zahl 280, 15 g Ethylendiamin/Propylenoxid-Polyether der OH-Zahl 480, 1 g Schaumstabilisator (Typ DC 193 von Dow Corning Corp.), 1,5 g Dimethylcyclohexylamin und 3,0 g Wasser innig vermischt, in einen Druckbehälter (Aerosoldose) gefüllt, mit einem handelsüblichen Aerosolventil verschlossen und mit 5,8 g 1,1,1,2-Tetrafluorethan begast. Durch kräftiges Schütteln der Mischung wurde diese homogenisiert, anschließend der Überdruck aus der Dose abgelassen, die Dose geöffnet, der Inhalt mit 180 g MDI innig vermischt und in eine Papierform gegossen. Nach Aufschäumung des Gemisches resultierte ein Schaumstoff mit einer überwiegend grobzelligen Struktur.

**Vergleichsbeispiel 3:**

(Verwendung von 2H-Heptafluorpropan (Siedepunkt -17,3 °C) neben $CO_2$ als Treibmittel)

Es wurde verfahren wie im Vergleichsbeispiel 2, aber statt 5,8 g 1,1,1,2-Tetrafluorethan wurden 9,3 g 2H-Heptafluorpropan verwendet.

**Beispiel 1:**

Es wurde verfahren wie in Vergleichsbeispiel 2, aber statt 5,8 g 1,1,1,2-Tetrafluorethan wurden 2,8 g 1,1,1,2-Tetrafluorethan und 5 g 2-Hydro-hexafluorpropyl-methylether ($CF_3$-CHF-$CF_2$-O-$CH_3$) verwendet.

**Beispiel 2:**

Es wurde verfahren wie in Vergleichsbeispiel 2, aber der Wasseranteil von 3,0 auf 2,0 g sowie der MDI-Anteil von 180 g auf 165 g abgesenkt und zusätzlich (neben 1,1,1,2-Tetrafluorethan) 7,5 g 1-Hydro-tetrafluorethyl-methylether ($CHF_2$-$CF_2$-O-$CH_3$) verwendet.

**Beispiel 3:**

Es wurde verfahren wie in Beispiel 2, aber statt 5,8 g 1,1,1,2-Tetrafluorethan wurden 9,7 g 2H-Heptafluorpropan eingesetzt.

**Beispiel 4:**

Es wurde verfahren wie in Vergleichsbeispiel 1, aber statt 3,8 g Wasser wurden 2,0 g Wasser, statt 192 g MDI 165 g MDI, sowie 11,5 g 1,1-2,2-3,3-4,4-Octafluorbutan und 7,5 g 1-Hydro-tetrafluorethyl-methylether ($CHF_2$-$CF_2$-O-$CH_3$) verwendet.

**Beispiel 5:**

Es wurde verfahren wie in Vergleichsbeispiel 3, aber der 2H-Heptafluorpropan-Anteil auf 4,7 g gesenkt und zusätzlich 5,0 g 2-Hydro-hexafluorpropyl-methylether ($CF_3$-CHF-$CF_2$-O-$CH_3$) verwendet.

**Beispiel 6:**

Es wurde verfahren wie in Vergleichsbeispiel 1, aber 5,0 g 2-Hydro-hexafluorpropyl-methylether und 2,2 g 1,3-Difluorpropan mitverwendet. Der Wasseranteil wurde von 3,8 g auf 3,0 g und der MDI-Anteil von 192 g auf 180 g abgesenkt.

**Beispiel 7:**

Es wurde verfahren wie in Vergleichsbeispiel 2, aber statt 5,8 g 1,1,1,2-Tetrafluorethan wurden 3,8 g 1,1,1-2,2-3,3-4,4-Nonafluorhexan ($CF_3$-$CF_2$-$CF_2$-$CF_2$-$CH_2$-$CH_3$) und 2,3 g (1,1-Difluor-2,2-difluor-ethyl)-ethylether ($CHF_2$-$CF_2$-O-$CH_2$-$CH_3$) eingesetzt.

**Beispiel 8:**

45 g Sorbitol/Glycerin/Propylenoxid-Polyether der OH-Zahl 560 wurden mit 15 g Ethylendiamin/Propylenoxid-Polyether der OH-Zahl 480, 20 g Glycerin/Propylenoxid-Polyether der OH-Zahl 160, 20 g Tetrabromphthalat-Diol der OH-Zahl 220, 20 g Trichlorethylphosphat, sowie je 1,0 g der mit den Handelsbezeichnungen DC 190 und DC 198 von der Dow Corning Corp. vertriebenen Schaumstabilisatoren, 1,0 g Dimethylcyclohexylamin, 2,2 g Wasser, 14 g 1,1-2,2-3,3-4,4-5,5-6,6,6-Fluorhexan ( 1H-Perfluorhexan, $CHF_2$-$CF_2$-$CF_2$-$CF_2$-$CF_2$-$CF_3$) und 8,8 g (1,1-Difluor-2,2-difluor-ethyl)-1,1,1-trifluor-ethylether ($CHF_2$-$CF_2$-O-$CH_2$-$CF_3$) nach der im Vergleichsbeispiel 1 beschriebenen Arbeitsweise mit 137 g MDI vermischt und aufgeschäumt.

**Beispiel 9:**

Es wurde die in Beispiel 8 beschriebene Rezeptur verwendet, außer daß statt 14 g 1,1-2,2-3,3-4,4-5,5-6,6,6-Fluorhexan 7,4 g 2H-Heptafluorpropan eingesetzt wurden, und diese Verbindung wurde nach der in Vergleichsbeispiel 2 beschriebenen Arbeitsweise der Mischung zugesetzt.

**Beispiel 10:**

Es wurde verfahren wie im Beispiel 9, aber die 7,4 g 2H-Heptafluorpropan wurden durch 4,5 g 1,1,1,2-Tetrafluorethan ersetzt.

**Tabelle 1:**

Dampfdrücke von Fluoralkanen sowie deren Gemischen mit fluorierten Ethern und Schaumrohstoffen vor dem Polyisocyanatzusatz

| Art der Komponente | Dampfdruck (bar) bei 298 K |
|---|---|
| 1,1,1,2-Tetrafluorethan | 5,8 |
| 2H-Heptafluorpropan | 4,4 |
| Rezeptur von Beispiel 10 (enthaltend 1,1,1,2-Tetrafluorethan und 1,1-Difluor-2,2-difluor-ethyl-1,1,1-trifluorethylether) vor MDI-Zusatz | 0,3 |
| Rezeptur von Beispiel 1 (enthaltend 1,1,1,2-Tetrafluorethan und 2-Hydro-hexafluorpropyl-methylether) vor MDI-Zusatz | 0,2 |
| Rezeptur von Beispiel 9 (enthaltend 2H-Heptafluorpropan und 1,1-Difluor-2,2-difluor-ethyl-1,1,1-trifluorethylether) vor MDI-Zusatz | 0,2 |
| Rezeptur von Beispiel 5 (enthaltend 2H-Heptafluorpropan und 2-Hydro-hexafluorpropyl-methylether) vor MDI-Zusatz | 0,1 |

6

**Tabelle 2**

| | | Verwendete Treibgas-Komponenten außer $CO_2$ | Mol-Verhältnis Wasser/Treibgas | Eigenschaften des Schaumstoffes | | |
|---|---|---|---|---|---|---|
| | | | | Rohdichte $(kg/m^3)$ | Wärmeleitfähigkeit 23 °C, $mW/(m \cdot K)$ nach 1 Tag | nach 6 Wochen |
| Vergleichsbeispiel | 1 | keines | 100/0 | 37 | 25,8 | 34,7 |
| " | 2 | 1,1,1,2-Tetrafluorethan (R 134a) | 75/25 | 43 | 26,4 | 30,2 |
| " | 3 | 2H-Heptafluorpropan (R 227) | 75/25 | 48 | 24,9 | 31,1 |
| Beispiel | 1 | R 134a und $CH_3OCF_2CHFCF_3$ | 75/25 | 36 | 24,2 | 26,8 |
| " | 2 | R 134a und $CH_3OCF_2CHF_2$ | 50/50 | 42 | 23,3 | 25,7 |
| " | 3 | R 227 und $CH_3OCF_2CHF_2$ | 50/50 | 41 | 23,0 | 25,4 |
| " | 4 | $HCF_2CF_2CF_2CF_2H$ und $CH_3OCF_2CHF_2$ | 50/50 | 36 | 22,5 | 23,6 |
| " | 5 | R 227 und $CH_3OCF_2CHFCF_3$ | 75/25 | 37 | 23,8 | 25,6 |
| " | 6 | $FCH_2CH_2CH_2F$ und $CH_3OCF_2CHFCF_3$ | 75/25 | 35 | 24,2 | 27,5 |
| " | 7 | $CH_3CH_2CF_2CF_2CF_3$ und $C_2H_5OCHFCF_3$ | 85/15 | 39 | 23,5 | 26,8 |
| " | 8 | $HCF_2CF_2CF_2CF_2CF_3$ und $CF_3CH_2OCHFCF_3$ | 60/40 | 34 | 22,2 | 23,1 |
| " | 9 | R 227 und $CF_3CH_2OCHFCF_3$ | 60/40 | 38 | 22,9 | 23,8 |
| " | 10 | R 134a und $CF_3CH_2OCHFCF_3$ | 60/40 | 36 | 23,2 | 24,2 |

## Patentansprüche

1. Verfahren zur Herstellung von Schaumstoffen auf Basis von Polyisocyanaten durch Umsetzung von Polyisocyanaten, Verbindungen mit mindestens zwei gegenüber Isocyanatgruppen reaktionsfähigen Wasserstoffatomen, Treibmitteln und gegebenenfalls weiteren Zusatzmitteln, dadurch gekennzeichnet, daß man Treibmittel verwendet, die zu mindestens 10 Mol-% aus mindestens einem Fluoralkan der Formel (I) $C_aH_bF_c$ , mit a = 2-6, b = 1-12 und c = 2-13, und mindestens einem fluorierten Ether der Formel (II) $C_aH_bF_c$-O-$C_dH_eF_f$ , mit a = 1-6, b = 1-12, c = 1-12, d = 1-2, e = 0-5 und f = 0-5, bestehen.

2. Verfahren nach Anspruch 1, dadurch gekennzeichnet, daß der Rest des Treibmittels zumindest teilweise aus $CO_2$ besteht, welches durch Zusatz von Wasser bei der Umsetzung der Polyisocyanate gebildet wird.

3. Verfahren nach Anspruch 1, dadurch gekennzeichnet, daß der Rest des Treibmittels aus $CO_2$ besteht, welches durch Zusatz von Wasser bei der Umsetzung der Polyisocyanate gebildet wird.

4. Verfahren nach einem der Ansprüche 1 bis 3, dadurch gekennzeichnet, daß man ein Treibmittel verwendet, das zu mindestens 20 Mol-% aus mindestens einem Fluoralkan der Formel (I) und mindestens einem fluorierten Ether der Formel (II) besteht.

5. Verfahren nach einem der Ansprüche 1 bis 3, dadurch gekennzeichnet, daß man ein Treibmittel verwendet, das zu 40-60 Mol-% aus mindestens einem Fluoralkan der Formel (I) und mindestens einem fluorierten Ether der Formel (II) besteht.

6. Verfahren nach einem der Ansprüche 1 bis 5, dadurch gekennzeichnet, daß man einen oder mehrere Fluoralkane der Formel (I) mit a = 2-5, b = 1-9 und c = 3-11 einsetzt.

7. Verfahren nach einem der Ansprüche 1 bis 5, dadurch gekennzeichnet, daß man einen oder mehrere Fluoralkane der Formel (I) mit a = 2-4, b = 1-6 und c = 4-9 einsetzt.

8. Verfahren nach einem der Ansprüche 1 bis 7, dadurch gekennzeichnet, daß man einen oder mehrere fluorierte Ether der Formel (II) mit

$$a = 1-5 \qquad d = 1-2$$
$$b = 1-6 \qquad e = 0-3$$
$$c = 5-10 \qquad f = 2-5 \text{ einsetzt.}$$

9. Verfahren nach einem der Ansprüche 1 bis 7, dadurch gekennzeichnet, daß man einen oder mehrere fluorierte Ether der Formel (II) mit

$$a = 1-3 \qquad d = 1-2$$
$$b = 1-4 \qquad e = 0-3$$
$$c = 1-6 \qquad f = 2-5 \text{ einsetzt.}$$

10. Verfahren nach einem der Ansprüche 1 bis 9, dadurch gekennzeichnet, daß das Molverhältnis der Fluoralkane der Formel (I) zu den fluorierten Ethern der Formel (II) 1 : 10 bis 10 : 1 beträgt.

11. Schaumstoffe, erhältlich nach dem Verfahren gemäß einem der Ansprüche 1 bis 10.

**Patentansprüche für folgenden Vertragsstaat: ES**

1. Verfahren zur Herstellung von Schaumstoffen auf Basis von Polyisocyanaten durch Umsetzung von

EP 0 450 308 A2

Polyisocyanaten, Verbindungen mit mindestens zwei gegenüber Isocyanatgruppen reaktionsfähigen Wasserstoffatomen, Treibmitteln und gegebenenfalls weiteren Zusatzmitteln, dadurch gekennzeichnet, daß man Treibmittel verwendet, die zu mindestens 10 Mol-% aus mindestens einem Fluoralkan der Formel (I) $C_aH_bF_c$ , mit a = 2-6, b = 1-12 und c = 2-13, und mindestens einem fluorierten Ether der Formel (II) $C_aH_bF_c$-O-$C_dH_eF_f$ , mit a = 1-6, b = 1-12, c = 1-12, d = 1-2, e = 0-5 und f = 0-5, bestehen.

2. Verfahren nach Anspruch 1, dadurch gekennzeichnet, daß der Rest des Treibmittels zumindest teilweise aus $CO_2$ besteht, welches durch Zusatz von Wasser bei der Umsetzung der Polyisocyanate gebildet wird.

3. Verfahren nach Anspruch 1, dadurch gekennzeichnet, daß der Rest des Treibmittels aus $CO_2$ besteht, welches durch Zusatz von Wasser bei der Umsetzung der Polyisocyanate gebildet wird.

4. Verfahren nach einem der Ansprüche 1 bis 3, dadurch gekennzeichnet, daß man ein Treibmittel verwendet, das zu mindestens 20 Mol-% aus mindestens einem Fluoralkan der Formel (I) und mindestens einem fluorierten Ether der Formel (II) besteht.

5. Verfahren nach einem der Ansprüche 1 bis 3, dadurch gekennzeichnet, daß man ein Treibmittel verwendet, das zu 40-60 Mol-% aus mindestens einem Fluoralkan der Formel (I) und mindestens einem fluorierten Ether der Formel (II) besteht.

6. Verfahren nach einem der Ansprüche 1 bis 5, dadurch gekennzeichnet, daß man einen oder mehrere Fluoralkane der Formel (I) mit a = 2-5, b = 1-9 und c = 3-11 einsetzt.

7. Verfahren nach einem der Ansprüche 1 bis 5, dadurch gekennzeichnet, daß man einen oder mehrere Fluoralkane der Formel (I) mit a = 2-4, b = 1-6 und c = 4-9 einsetzt.

8. Verfahren nach einem der Ansprüche 1 bis 7, dadurch gekennzeichnet, daß man einen oder mehrere fluorierte Ether der Formel (II) mit

$$a = 1\text{-}5 \qquad d = 1\text{-}2$$
$$b = 1\text{-}6 \qquad e = 0\text{-}3$$
$$c = 5\text{-}10 \qquad f = 2\text{-}5 \text{ einsetzt.}$$

9. Verfahren nach einem der Ansprüche 1 bis 7, dadurch gekennzeichnet, daß man einen oder mehrere fluorierte Ether der Formel (II) mit

$$a = 1\text{-}3 \qquad d = 1\text{-}2$$
$$b = 1\text{-}4 \qquad e = 0\text{-}3$$
$$c = 1\text{-}6 \qquad f = 2\text{-}5 \text{ einsetzt.}$$

10. Verfahren nach einem der Ansprüche 1 bis 9, dadurch gekennzeichnet, daß das Molverhältnis der Fluoralkane der Formel (I) zu den fluorierten Ethern der Formel (II) 1 : 10 bis 10 : 1 beträgt.

9